Europäisches Patentamt

European Patent Office

Office européen des brevets

(11) Publication number: **0 337 822**
A1

# (12) EUROPEAN PATENT APPLICATION

(21) Application number: 89303787.9

(22) Date of filing: 17.04.89

(51) Int. Cl.⁴: **B 07 B 13/16**
B 07 B 1/00, E 02 F 5/02,
E 02 F 7/06

(30) Priority: 15.04.88 GB 8808998

(43) Date of publication of application:
18.10.89 Bulletin 89/42

(84) Designated Contracting States: ES

(71) Applicant: EXTEC SCREENS & CRUSHERS LIMITED
Nether Lane Ecclesfield
Sheffield South Yorkshire S30 3XT (GB)

(72) Inventor: Douglas, Patrick Joseph
2 School Lane
Santon Douglas Isle of Man (GB)

(74) Representative: Orr, William McLean et al
URQUHART-DYKES & LORD 5th Floor, Tower House
Merrion Way
Leeds West Yorkshire, LS2 8PA (GB)

(54) Screening apparatus for bulk material.

(57) There is disclosed portable screening apparatus for separating larger particles from finer particles in bulk materials, and which comprises an elevator (1) having an inlet at its lower end for receiving a supply of bulk material to be screened, and an outlet at its upper end for discharging the elevated bulk material so as to fall under gravity onto a screen deck (9) arranged below the upper end of the elevator. The screen deck (9) co-operates with the elevator (1), and has an upper receiving end (8) arranged to receive bulk material falling under gravity from the outlet of the elevator (1) and a lower discharge end (10) to discharge the larger particles of bulk material which pass over the screen deck without passing downwardly through the apertures thereof. The general axis of the screen deck (9) extends transversely of the general direction of the elevator (1), as seen in plan, and a spreader (4) is arranged at the outlet of the elevator (1) so as to distribute the bulk material substantially uniformly along the upper receiving end (8) of the screen deck (9).

Figure 1

## Description

## SCREENING APPARATUS FOR BULK MATERIAL

This invention relates to a screening apparatus for bulk material and is particularly, though not exclusively, concerning with portable screening apparatus of a type suitable for use in separating larger particles from finer particles of bulk materials, such as coal, gravel, soil or mineral ores.

A typical screening apparatus consists of a feeder device whose function is to feed the material to be screened at a controlled rate onto the surface of an inclined troughed belt conveyor, whereby it is carried and elevated to a position above a sloping flat screen deck. As the material falls over the head drum at the upper end of the conveyor, it is caused to be spread along the uppermost edge of the screen deck by a spreader device. According to the relative sizes of the particles and of the apertures in the screen deck, finer particles pass through the apertures and then fall from the underside of the screen deck, whilst coarser particles roll or slide over the upper surface of the screen deck until they fall from its lowermost edge.

Fundamentally, this is the means by which the particles are separated, though it is quite common to facilitate the screening process by vibrating the screen deck, and it is also common to employ two or more screen decks of differing aperture size, located one above the other, in order to segregate three or more different particle sizes in one operation.

The longitudinal axis of the elevating conveyor is usually aligned with the longitudinal axis of the screen deck, when viewed from above. This maximises the stability of the machine, by ensuring that its centre of gravity is substantially central, and it also minimises the overall width of the machine, as well as facilitating spreading the material evenly across the screen deck. Thus, in the case of conventional portable screening equipment the direction of the slope of the screen deck is either:

(a) downwardly and continuing along the direction of motion of the material on the conveyor, when viewed from above; or

(b) downwardly and back underneath the elevating conveyor in an opposite direction to the direction of motion of the conveyor, when viewed from above.

The conventional arrangements described above suffer from certain disadvantages. For example, when it is desired to pass the separated coarse particles through a crushing or a shredding process and then to be re-cycled back to the feeder of the screening apparatus for re-screening, it is often found that because the coarse particles are discharged in line with the axis of the machine, the physical arrangment of the conveyors is unavoidably unwieldy and complicated, especially when handling sticky materials which do not slide readily down chutes.

It is therefore an object of the invention to provide a screening apparatus in which the larger particles which pass over the screen deck or decks can be discharged laterally of the apparatus.

According to the invention there is provided a screening apparatus for bulk material and which comprises:

an elevator having an inlet at its lower end for receiving a supply of bulk material to be screened and an outlet at its upper end for discharging the elevated bulk material; and,

a screen deck co-operable with the elevator and having an upper receiving end to receive bulk material from the outlet of the elevator and a lower discharge end to discharge the larger particles of the bulk material which pass over the screen deck; in which:

the general direction of the screen deck extends transversely of the general direction of the elevator, as seen in plan; and,

a spreader is arranged at the outlet of the elevator so as to distribute the bulk material substantially uniformly along the upper receiving end of the screen deck.

Therefore, a screening apparatus according to the invention is able to discharge the larger particles to a discharge position laterally of the elevator, after supply of the bulk material substantially uniformly to the deck, and this provides for more convenient handling of the bulk material and, if desired, enables the larger particles readily to be recycled to the elevator inlet via a suitable arrangment of conveyors and a crushing or shredding apparatus.

Preferably, the screening apparatus is constructed in such a way that the apparatus, or at least its component parts, are readily portable, to permit it readily to be transported from one site to another.

The preferred minimum angle of inclination of the axis of the screen deck to the axis of the elevator is 20°, and two particularly advantageous embodiments have inclinations of approximately 45° and 90°.

Means may be provided to supply bulk material at a controlled rate to the elevator inlet, and preferably comprise a hopper feeder, which may be one of conventional designs available.

The spreader may comprise a plurality of guide channels, having their inlets spaced apart laterally with respect to the axis of the elevator, and each channel is shaped so as to guide the bulk material conveyed therealong to a discharge outlet arranged above the upper receiving end of the screen deck and at a predetermined position along this end, as seen in plan.

Thus, in a preferred arrangement, the inlets of the channels are equally spaced apart across the discharge end of the elevator, whereas the outlets are spaced apart equally across the receiving end of the screen deck, so that substantially uniform discharge of bulk material can take place onto the screen deck.

The guide channels may be defined between laterally spaced upright walls, and which follow suitable paths, such as curved or stepped inclined paths, to guide the material from their inlets to their outlets.

In the case of a 90° angular separation of the elevator and screen deck, the walls may be substantially in the form of a quarter circle.

If desired, the screen deck may be provided with any suitable vibrating means, and of course more than one set of screen decks may be provided. Also, there may be provision for adjusting the angle of inclination (as seen in plan) of the screen deck relative to the elevator.

Embodiments of screening apparatus according to the invention will now be described in detail, by way of example only, with reference to the accompanying drawings, in which:

Figure 1 is a side view of a first embodiment of portable screening apparatus for bulk material;

Figure 2 is a plan view of the embodiment shown in Figure 1; and, Figure 3 is a plan view of an alternative embodiment of screening apparatus.

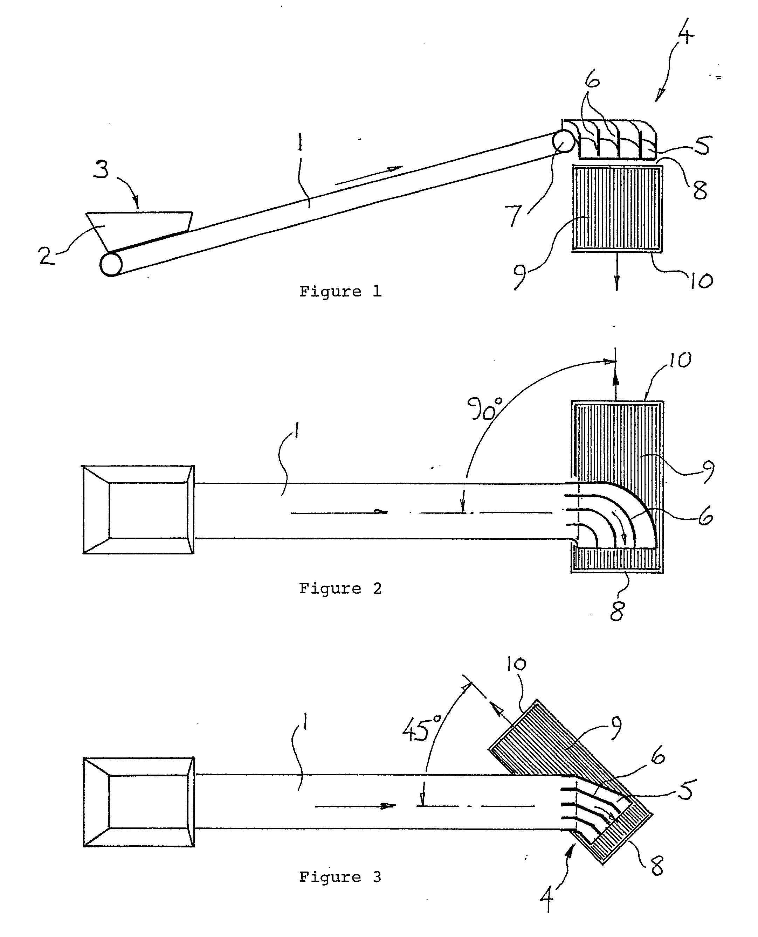

Referring first to Figures 1 and 2 of the drawings, the first embodiment of portable screening apparatus according to the invention comprises an elevator 1 having an inlet at its lower end for receiving a supply of bulk material to be screened, this supply being provided by a hopper feeder device 2 having the function of allowing bulk material 3 to flow at a controlled rate onto the inlet of the conveyor 1. The conveyor 1 is an inclined troughed-belt conveyor elevator, and which has an outlet at its upper end for discharging the elevated bulk material so as to fall under gravity onto a screen deck 9 arranged below the upper end of the elevator.

The screen deck 9 co-operates with the elevator 1, and has an upper receiving end 8 arranged to receive bulk material falling under gravity from the outlet of the elevator 1, and a lower discharge end 10 to discharge the larger particles of bulk material which pass over the screen deck without passing downwardly through the apertures thereof.

As can be seen from the embodiment of Figures 1 and 2, the general axis or direction of the screen deck 9 extends transversely of the general direction of the elevator 1, as seen in plan, and in this embodiment this inclination is at 90°.

In addition, a spreader 4 is arranged at the outlet of the elevator 1, so as to distribute the bulk material substantially uniformly along the upper receiving end 8 of the screen deck 9. In this way, the screening apparatus is able to discharge the larger particles to a discharge position laterally of the elevator 1, and this provides for more convenient handling of the bulk material and, if desired, enables the larger particles readily to be recycled to the elevator inlet via a crushing or shredding apparatus and a suitable arrangement of return conveyors.

The component parts of the screening apparatus are constructed in such a way as to be readily separated from each other and to render the component parts portable, to permit the apparatus to be readily transported from one site to another.

The spreader 6 comprises a plurality of guide channels, each having chutes 5, and which have their inlets spaced apart laterally at equal distances from each other across the upper discharge end of the elevator, above the head drum 7 thereof. Each guide channel is shaped so as to guide the bulk material conveyed therealong to a discharge outlet arranged above the upper receiving end 8 of the screen deck 9, and at a predetermined position along this end, as seen in plan.

In the illustrated arrangement, there are four guide channels arranged side by side, and the four inlets are uniformly arranged across the upper end of the elevator, whereas the four outlets are arranged substantially uniformly across the upper receiving end 8 of the screen deck 9, so that substantially uniform discharge of material can take place onto the screen deck.

In the embodiment of Figures 1 and 2, the screen deck 9 extends substantially perpendicularly of the elevator 1, and therefore conveniently the guide channels are defined between laterally spaced upright walls which define arcuate paths which are substantially one quarter of a circle.

While the embodiment of Figures 1 and 2 has a 90° arrangement of screen deck 9 and elevator 1, the invention is generally concerned with any arrangement of elevator and screen deck, in which the respective axes extend laterally of each other, and preferably at a minimum angle no less than 20°.

In Figure 3, there is shown a plan view of an alternative embodiment, in which the relative inclination of the axes is 45°. To achieve the necessary guidance of the bulk material from the elevator and substantially uniformly to the screen deck, it is necessary for the guide walls of the spreader 6 to take the form of stepped inclined upright walls, or an arcuate arrangement may be provided if required (not shown).

Although not shown, the screen deck 9 may be provided with any suitable vibrating means, and more than one set of screen decks may be arranged in combination, as known per se. Also, there may be provision for adjusting the angle of inclination (as seen in plan) of the screen deck relative to the elevator.

## Claims

1. A screening apparatus for bulk material and which comprises:
an elevator having an inlet at its lower end for receiving a supply of bulk material to be screened and an outlet at its upper end for discharging the elevated bulk material; and,
a screen deck co-operable with the elevator and having an upper receiving end to receive bulk material from the outlet of the elevator and a lower discharge end to discharge the larger particles of the bulk material which pass over the screen deck;
in which:
the general direction of the screen deck extends transversely of the general direction of the elevator, as seen in plan; and,
a spreader is arranged at the outlet of the elevator so as to distribute the bulk material substantially uniformly along the upper receiving end of the screen deck.

2. A screening apparatus according to Claim 1, in which the component parts of the screening apparatus can be separated from each other in order to render the component parts portable.

3. A screening apparatus according to Claim 1 or 2, in which the angle of inclination of the axis of the screen deck to the axis of the elevator, as seen in plan, lies in the range between 20° and 90°.

4. A screening apparatus according to Claim 3, in which the axis of the screen deck is inclined to the axis of the elevator at an angle of approximately 45° or 90°.

5. A screening apparatus according to any one of the preceding claims, in which the spreader comprises a plurality of guide channels, having their inlets spaced apart laterally with respect of the axis of the elevator, and each channel being shaped so as to guide the bulk material conveyed there along to a discharge outlet arranged above the upper receiving end of the screen deck and at a predetermined position along this end, as seen in plan.

6. A screening apparatus according to Claim 5, in which the inlets of the channels are equally spaced apart across the discharge end of the elevator, whereas the outlets of the channels are spaced apart equally across the receiving end of the screen deck, so that substantially uniform discharge of bulk material can take place onto the screen deck.

7. A screening apparatus according to Claim 5 or 6, in which the guide channels are defined between laterally spaced upright walls which follow suitable paths to guide the material from the inlets of the channels to the outlets thereof.

8. A screening apparatus according to Claim 7, in which the upright walls follow curved or stepped inclined paths.

9. A screening apparatus according to Claim 8, and having the axis of the screen deck extending substantially perpendicular to the axis of the elevator, as seen in plan, in which the walls of the guide channels each follow the shape of a quarter circle.

10. A screening apparatus according to any one of the preceding claims, in which the screen deck is provided with vibrating means, and means is provided for adjusting the angle of inclination, as seen in plan, of the screen deck relative to the elevator.

Figure 1

Figure 2

Figure 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 840 962 (STEELE et al.)<br>* Page 2, line 86 - page 3, line 2; figures * | 1,3,4 | B 07 B 13/16<br>B 07 B 1/00<br>E 02 F 5/02<br>E 02 F 7/06 |
| Y<br>A | | 2,5<br>9,10 | |
| Y | DE-C-3 644 603 (FISCHER-JUNG)<br>* Column 4, lines 59-63; column 5, lines 29-34; column 6, lines 4-35; figures * | 2 | |
| A | | 1,10 | |
| Y | US-A-1 332 006 (SCHADT et al.)<br>* Whole document * | 5 | |
| A | | 1,6,7 | |
| A | FR-A- 983 164 (TIZIANI)<br>* Whole document * | 1,3,4,9<br>,10 | |
| A | US-A-4 572 782 (SMITH et al.)<br>* Column 2, lines 36-51; column 3, lines 14-35; figures * | 1,5,6,7 | |
| A | US-A-4 216 914 (O'HANLON)<br>* Column 2, lines 23-35; column 2, line 63 - column 3, line 5; column 3, line 34 - column 4, line 43; column 5, lines 34-49; figures * | 5,6,7,8 | |
| A | GB-A-1 542 326 (HARPER)<br>* Page 1, lines 37-48; page 2, lines 1-23; figures * | 10 | |

TECHNICAL FIELDS
SEARCHED (Int. Cl.4)

B 07 B
B 65 G
E 02 F
A 01 D

The present search report has been drawn up for all claims

| Place of search | Date of completion of the search | Examiner |
|---|---|---|
| THE HAGUE | 20-06-1989 | VAN DER ZEE W.T. |